# EUROPEAN PATENT SPECIFICATION

(11) **EP 2 937 435 B1**
(45) Date of publication and mention of the grant of the patent: **12.06.2024**
(21) Application number: 13864096.6
(22) Date of filing: 19.12.2013
(51) Int. Cl.: C22C 21/12, C22F 1/04, B21B 3/00, B64F 5/00, C22F 1/00, C22C 21/14, C22C 21/16, C22C 21/18, C22F 1/057

(54) **METHOD OF MANUFACTURING A FRAME MADE OF ALUMINUM ALLOY FOR AIRCRAFT USE**
VERFAHREN ZUR HERSTELLUNG EINES ALUMINIUMLEGIERUNGSFORMBAUTEILS FÜR FLUGZEUGE
PROCÉDÉ DE FABRICATION D'UN COMPOSANT FAÇONNÉ EN ALLIAGE D'ALUMINIUM DESTINÉ À UN AÉRONEF

(30) Priority: 21.12.2012 JP 2012279796
(43) Date of publication of application: 28.10.2015
(73) Proprietor: Kawasaki Jukogyo Kabushiki Kaisha, Kobe-shi, Hyogo 650-8670 (JP)
(72) Inventor: OKADA, Hideki, Gifu 504-8710 (JP); ISHIKAWA, Chikara, Gifu 504-8710 (JP); YAMADA, Etsuko, Gifu 504-8710 (JP); WADA, Takumi, Gifu 504-8710 (JP)
(74) Representative: Leinweber & Zimmermann
(86) International application number: PCT/JP2013/007463
(87) International publication number: WO 2014/097631

(56) References cited:
- WO-A1-2009/036953
- WO-A2-2012/033949
- JP-A- H02 160 134
- JP-A- 2006 523 145
- US-A1- 2007 246 137
- GUERICKE W: "Material Model Describing yclic Elastic-Plastic Deformation of Roller Levelling and Straightening Processes", STEEL RESEARCH INTERNATIONAL, VERLAG STAHLEISEN GMBH., DUSSELDORF, DE, vol. 80, no. 4, 1 April 2009 (2009-04-01), pages 281-287, XP001546102, ISSN: 1611-3683, DOI: 10.2374/SRI09SP06

## Description

### Technical Field

The present invention relates to a method of manufacturing a frame that is a formed component for aircraft use made of an aluminum - lithium alloy.

### Background Art

One example of a typical material used in formed components for aircraft use is an aluminum alloy. In particular, a lithium-containing aluminum alloy (hereinafter, simply referred to as an "aluminum-lithium alloy") has a lower density than the other aluminum alloys, and in addition, has excellent strength. Therefore, replacing formed components made of aluminum by formed components made of an aluminum-lithium alloy has been discussed aiming to realize, for example, further reduction of the weight of aircrafts.

It is known that in order to use an aluminum-lithium alloy in a component for aircraft use, the temper of the aluminum alloy, which is specified by international standards and the like, should be T8. However, an aluminum-lithium alloy in the T8 state has poor ductility and a small work hardening coefficient. Therefore, it is difficult to manufacture a formed component for aircraft use by forming of such an aluminum-lithium alloy. For this reason, for example, in a case where such an aluminum-lithium alloy is used as the material of a formed component for aircraft use other than an aircraft skin, such as an aircraft frame, the formed component for aircraft use is manufactured in such a manner that the material fabricated from a sheet material, a plate material, or an extrusion-molded member is mechanically machined into an intended shape, or even if forming of the material is performed, the forming to be performed is significantly limited.

In the field of manufacturing roll-formed components for aircraft use from 7000-series aluminum alloys, there is a known method for improving material strength and corrosion resistance by suitably adjusting conditions for aging treatment (artificial age-hardening treatment). For example, Patent Literature 1 discloses a method of manufacturing a roll-formed component for aircraft use, the method including: performing a rolling process on a sheet-shaped coil material made of an aluminum alloy; then subjecting the material to solution heat treatment; and thereafter subjecting the material to three-staged aging treatment. By controlling the temperature in the aging treatment, both high strength and excellent corrosion resistance are realized.

### Citation List Patent Literature

PTL 1: Japanese Laid-Open Patent Application Publication No. 2003-213387

### Summary of Invention

### Technical Problem

In fabricating a formed component for aircraft use from an aluminum-lithium alloy, if the aforementioned mechanical machining is used, it will cause a decrease in material yield, and if extrusion molding is used, it will cause an increase in material cost. As a result, the manufacturing cost will increase significantly. Thus, adopting the mechanical machining or extrusion molding is impractical.

The aluminum alloy adopted in Patent Literature 1 is 7000 series (7xxx series) in the International Alloy Designation System for aluminum alloys. Patent Literature 1 makes no reference to whether or not the aluminum alloy, whose primary alloy components are zinc and magnesium, contains lithium. In addition, the temper of the roll-formed component for aircraft use obtained by the manufacturing method disclosed in Patent Literature 1 is T7. Therefore, it is substantially difficult to apply the manufacturing method disclosed in Patent Literature 1 to manufacturing of a formed component for aircraft use made of an aluminum-lithium alloy and adjust the temper of the formed component to T8. The same is true for the other aluminum alloys.

The present invention has been made to solve the above-described problems. An object of the present invention is to provide a technique that makes it possible to manufacture a formed component for aircraft use made of an aluminum alloy at a lower cost than conventional art.
WO 2009/036953 A1 discloses an Al-Cu-Li alloy product suitable for aerospace application. For producing said product, a thin sheet or thin plate is reduced in thickness by using a gauge. Moreover, the respective forming step is performed after an artificial age-hardening treatment.

### Solution to Problem

In order to solve the above-described problems, the invention provides for a method of manufacturing a frame according to the (single) claim.

According to the above configuration, after subjecting the material made of the aluminum alloy to the solution heat treatment, imparting the strain for realizing a T8 state to the material and forming the material into the predetermined shape are both performed by roll forming at the same time. As a result, the formed component for aircraft use made of the aluminum alloy can be manufactured at a lower cost than conventional art.

In the above-described method of manufacturing a formed component for aircraft use, the roll forming apparatus is configured as a multi-stage roll forming apparatus.

In the above-described method of manufacturing a formed component for aircraft use, a clearance of at least some of rolls of the multi-stage roll forming apparatus is adjusted to be less than a thickness of the material to impart a compressive strain to the material.

In the above-described method of manufacturing a formed component for aircraft use, the strain imparted to the material when the forming of the material is performed is a compressive strain.

In the above-described method of manufacturing a formed component for aircraft use, the aluminum alloy is an aluminum-lithium alloy containing lithium.

In the above-described method of manufacturing a formed component for aircraft use, the formed component for aircraft use is a frame.

The above object, other objects, features, and advantages of the present invention will be made clear by the following detailed description of a preferred embodiment with reference to the accompanying drawings.

### Advantageous Effects of Invention

The present invention is configured as described above, and has an advantage of making it possible to manufacture a formed component for aircraft use made of an aluminum alloy at a lower cost than conventional art.

### Brief Description of Drawings

Fig. 1 is a flowchart showing one example of a method of manufacturing a formed component for aircraft use made of an aluminum-lithium alloy according to one embodiment of the present invention.
Fig. 2 is a timing diagram showing temperature changes in the manufacturing method shown in Fig. 1.
Fig. 3 is a graph showing results of examples showing a relationship between a tensile strength and a strain amount for each test piece to which a compressive strain was imparted and each test piece to which a tensile strain was imparted.
Fig. 4 is a graph showing results of representative showing a relationship between a tensile strength and a strain amount for each test piece to which a compressive strain was imparted and each test piece to which a tensile strain was imparted.

### Description of Embodiments

Hereinafter, a preferred embodiment of the present invention is described with reference to the drawings. In the drawings, the same or corresponding elements are denoted by the same reference signs, and repeating the same descriptions is avoided below.

### [Formed Component for Aircraft Use]

A formed component for aircraft use according to the present invention is made of an aluminum alloy. The formed components are frames used as aircraft structural members.

An aluminum alloy used as the material of the formed component for aircraft use according to the present invention is an aluminum-lithium alloy. Examples of typical aluminum-lithium alloys include, among 8xxx series (8000 series) in the International Alloy Designation System for aluminum alloys, those containing lithium as a primary alloy component, and among 2xxx series (2000 series) in the International Alloy Designation System, those containing lithium as a secondary alloy component.

The aluminum alloys in 8xxx series are different from those in 1xxx series to 7xxx series. Among the aluminum alloys in 8xxx series, one example of aluminum alloy containing lithium as a primary alloy component (i.e., Al-Li based alloy) is 8090. The aluminum alloys in 2xxx series contain copper as a primary alloy component. Among the aluminum alloys in 2xxx series, those containing lithium as a secondary alloy component (i.e., Al-Cu-Li based alloys) are, for example, 2050 and 2090. Other than these, there are known aluminum-lithium alloys that contain copper and magnesium as alloy components (i.e., Al-Li-Cu-Mg based alloys), such as 2091 and 8091. These known aluminum-lithium alloys may each be used as the material of the formed component for aircraft use according to the present invention.

In the formed component for aircraft use according to the present invention, the temper of the aluminum-lithium alloy needs to be T8 (equivalent to JIS H0001). For example, in JIS H0001, an aluminum alloy with the temper T8 is defined as "one that has been subjected to solution heat treatment, then subjected to cold working, and further subjected to artificial age-hardening treatment" or "one that has been subjected to solution heat treatment, then subjected to cold working for increasing strength, and further subjected to artificial age-hardening treatment". In other words, the T8 state of an aluminum alloy is a state where the aluminum alloy has been subjected to solution heat treatment, then imparted with a strain by several percent in a thermally refined intermediate state, and further subjected to artificial age-hardening treatment. When the aluminum-lithium alloy is in the T8 state, its physical properties such as fracture toughness, strength, and corrosion resistance are excellent, and the aluminum-lithium alloy can be suitably used in the field of aircrafts.

### [Method of Manufacturing Formed Component for Aircraft Use]

A method of manufacturing a formed component for aircraft use according to the present invention is defined by the appended claim.

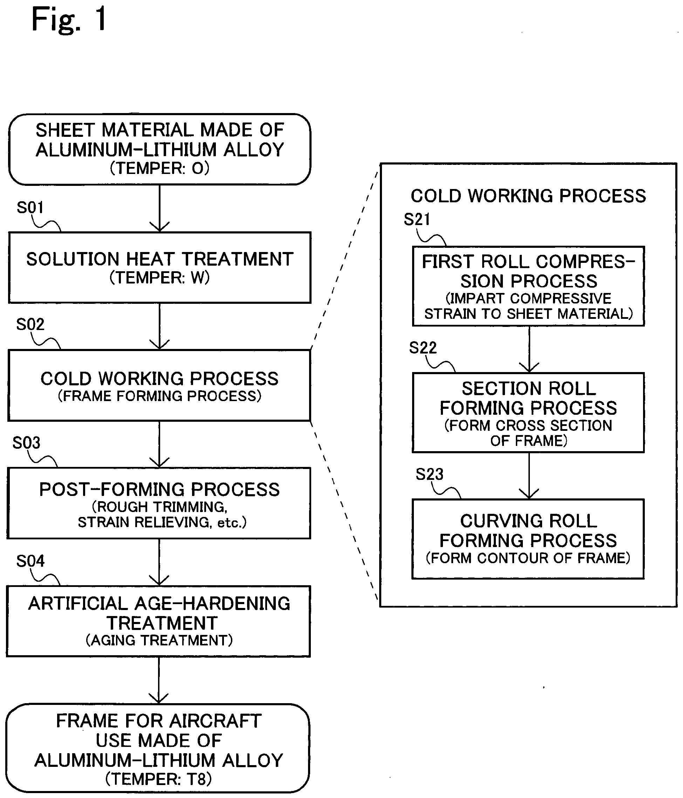

The manufacturing method according to the present invention is specifically described below by taking a frame as one example of the formed component for aircraft use. As shown in Fig. 1, first, a sheet (plate) material made of an aluminum-lithium alloy is prepared, and the sheet material is subjected to solution heat treatment (step S01). The temper of the sheet material is initially "O" (JIS H0001), and the sheet material is in a softened state owing to annealing. As a result of the solution heat treatment, the temper of the sheet material becomes "W" (JIS H0001), i.e., becomes harder than before the solution heat treatment.

Next, the sheet material in the W state is subjected to a cold working process (step S02). In the cold working process, the sheet material is stretched not in a general manner by a roll forming apparatus but in a manner using a multi-stage roll forming apparatus (a multi-stage roller forming apparatus), such that the sheet material is formed in the shape of the frame. Therefore, the cold working process in the present invention can be considered as a frame-forming process (or a component shape forming process).

In the cold working process, first, a compressive strain is imparted to the sheet material by first-stage rolls of the multi-stage roll forming apparatus (step S21, first roll compression process). In this process, the clearance of the first-stage rolls is adjusted to be less than the thickness of the sheet material, and thereby the compressive strain is imparted to the sheet material. The amount of compressive strain imparted at the time is substantially equivalent to a dislocation density necessary for realizing the T8 state. The compressive strain may be imparted by other rolls at the second or subsequent stage.

Next, forming of the sheet material, to which the compressive strain has been imparted, is performed by section rolls at the second or subsequent stage, such that a desired cross-sectional shape is imparted to the sheet material (step S22, section roll forming process). When the desired cross-sectional shape has been imparted to the sheet material, the next forming of the sheet material is performed by curving rolls, such that a desired contour (outline) is imparted to the sheet material (step S23, curving roll forming process). By undergoing these processes, the sheet material is formed into the frame.

Thereafter, the frame is subjected to a post-forming process (step S03). Specific examples of the post-forming process include rough trimming and strain straightening (strain relieving). However, the post-forming process is not limited to a particular process. Following the post-forming process, the frame sheet material is subjected to artificial age-hardening treatment (aging treatment) (step S04). As a result, the temper of the aluminum-lithium alloy forming the frame becomes T8. In this manner, the frame suitable for aircraft use made of the aluminum-lithium alloy can be obtained.

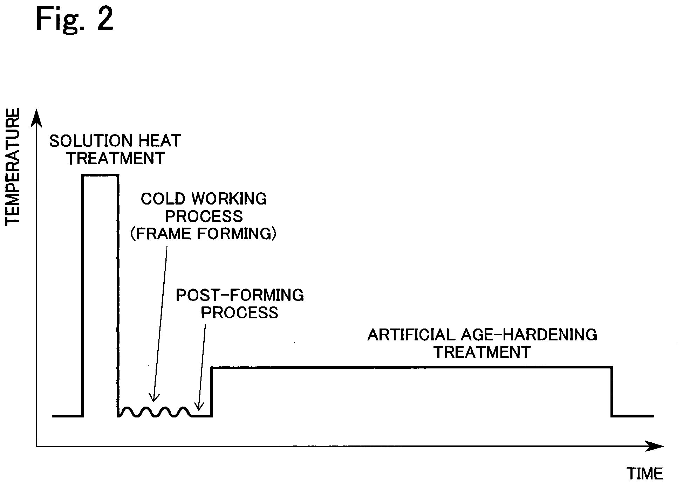

Fig. 2 illustrates the above-described manufacturing method in the form of a timing diagram showing temperature changes. As shown in Fig. 2, in the cold working process of the present invention, not simple stretching but both stretching and frame forming (component forming) are performed at the same time. Specifically, when the manufacturing process of the present invention is compared with a general manufacturing process, although the processes and treatments performed on the aluminum-lithium alloy are fundamentally the same between these manufacturing processes, there is a difference in terms of the manner of imparting the strain before the forming. Specifically, in the present invention, the compressive strain, which is substantially equivalent to a tensile strain for realizing the T8 state, is imparted to the sheet material made of the aluminum-lithium alloy after the solution heat treatment. In this manner, the formed component for aircraft use made of the aluminum-lithium alloy in the T8 state can be manufactured substantially by a rolling process. This consequently makes it possible to manufacture the formed component for aircraft use made of the aluminum-lithium alloy at a lower cost than conventional art.

Further, in the present invention, in accordance with requirements to meet for the manufactured formed component for aircraft use, such as strength, natural age-hardening treatment may be performed between the solution heat treatment (step S01) and the cold working process (step S02). By performing the natural age-hardening treatment, the strength of the manufactured formed component for aircraft use can be further improved.

It should be noted that the solution heat treatment and the cold working process (the imparting of the strain in the thermally refined intermediate state) may be performed as part of the process of manufacturing the formed component for aircraft use. However, as an alternative, the material that has been subjected to the solution heat treatment and the cold working process in advance may be used to manufacture the formed component for aircraft use. In other words, the solution heat treatment and the cold working process may be performed by the manufacturer of the material, or may be performed by the manufacturer of the formed component for aircraft use.

### [Variations]

It should be noted that, as described above in the embodiment, the sheet material is, after being subjected to the solution heat treatment, passed through the multi-stage roll forming apparatus, and thereby a compressive strain is imparted to the sheet material.

Further, in the embodiment, the multi-stage roll forming apparatus including the section rolls and curving rolls is used as an apparatus for performing the cold working process. However, the present invention is not thus limited. Any known forming apparatus capable of imparting a compressive strain to a sheet-shaped aluminum material may be suitably used as the apparatus for performing the cold working process. Specific examples of the forming apparatus using multi-stage rolls include a stretcher leveler and a roller leveler.

Further, in the embodiment, the clearance of the first-stage rolls is adjusted to be less than the thickness of the sheet material (i.e., less than the original thickness of the sheet material), and thereby a compressive strain is imparted to the sheet material. However, the degree of the clearance adjustment is not particularly limited. The clearance may be suitably set based on conditions, such as the kind of the aluminum-lithium alloy, the thickness of the sheet material, and a necessary degree of strain for realizing the T8 state.

In the example shown in Fig. 1 and Fig. 2, the formed component for aircraft use is a frame.

Although in the embodiment the material to which the strain is imparted after being subjected to the solution heat treatment is a sheet material, the present invention is of course not limited to this. A material different from the sheet material, i.e., a material with a different shape, may be suitably used, so long as a strain for realizing the T8 state can be imparted to the material.

It should be noted that the present invention is not limited to the embodiment described above, and various modifications can be made within the scope of the claim.

### Related Example

Hereinafter, "reference examples" and "working examples", illustrating some steps of the method of the present invention, are provided. The invention is defined by the appended claim.

### (Reference Example 1)

First, a sheet material made of an aluminum-lithium alloy whose temper is O is subjected to solution heat treatment, and thereby the temper of the sheet material is adjusted to W. Next, while a strain is being imparted to the sheet material under cold working conditions, the sheet material with the temper W is formed into a predetermined shape. The temper of the resultant sheet material (formed sheet material) is T3 or substantially T3. Thereafter, the formed sheet material whose temper is T3 or substantially T3 is subjected to artificial age-hardening treatment, and thereby the formed sheet material with a temper T8 is obtained.

As one Reference Example, a compressive strain was imparted to a sheet material whose temper was substantially T3 and then the sheet material was subjected to artificial age-hardening treatment. It was studied whether or not the Reference Example realized the same strength as a material that had been subjected to the artificial age-hardening treatment after being imparted with a tensile strain.

An aluminum-lithium alloy 2198 available from Constellium was used to obtain a strip-shaped test piece whose temper was adjusted to substantially T3 by thermal refining. The test piece is hereinafter referred to as a "pre-forming test piece" for the sake of convenience of the description. In order to impart a target amount of strain to the pre-forming test piece, the test piece was rolled by a rolling mill (trade name: two-stage rolling mill DBR 150 available from daito seisakuzyo inc.) at least once. In this manner, a compressive strain was imparted to the test piece. The test piece to which the compressive strain has been imparted is hereinafter referred to as a "strain-imparted test piece" for the sake of convenience of the description. It should be noted that four different target amounts of compressive strains of 2%, 5%, 8%, and 15% were imparted to pre-forming test pieces, respectively. An actually imparted strain amount was evaluated by measuring the thickness of each test piece by a micrometer before and after the rolling.

The strain-imparted test pieces were subjected to artificial age-hardening treatment, and thereby test pieces of Reference Example 1 were obtained. Each of the obtained test pieces is hereinafter referred to as a "post-forming test piece" for the sake of convenience of the description. A test piece for use in a tensile test was obtained from each post-forming test piece. A tensile testing machine (universal testing machine 100kN available from Instron) was used to perform the tensile test on the test piece in accordance with ASTM B557. Through the tensile test, data of the tensile strength, yield strength, Young's modulus, and the breaking elongation of each post-forming test piece were obtained. These data were compared with results obtained from Reference Example 2 described below and with the data of a "reference T8 material" having a temper T8, which was provided from a material manufacturer.

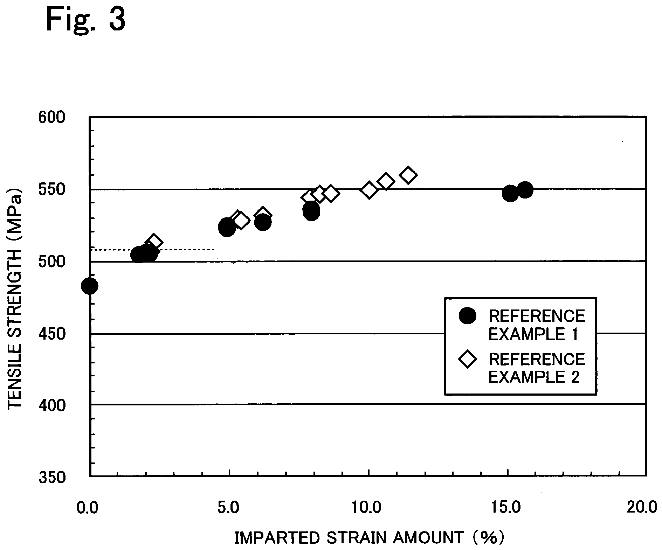

It should be noted that, among the obtained data, the tensile strength was chosen as representative data, and a relationship between the tensile strength and the strain amount was plotted on a graph. Results of the plotting are indicated by black circular symbols in Fig. 3.

In addition, the dislocation density of each post-forming test piece was measured by using an X-ray diffraction apparatus (trade name: fully automatic multipurpose X-ray diffraction apparatus PW3050 available from Spectris Co., Ltd.). Each post-forming test piece was also observed by a transmission electron microscope (TEM), and thereby a T1 phase deposited through the artificial age-hardening treatment was evaluated.

### (Reference Example 2)

By using the aforementioned tensile testing machine, four different amounts of tensile strains of 2%, 5%, 8%, and 15% were imparted to pre-forming test pieces, respectively, and thereby strain-imparted test pieces were obtained. Other than this point, post-forming test pieces of Reference Example 2 were obtained in the same manner as the post-forming test pieces of Reference Example 1. From each of the post-forming test pieces, a test piece for use in a tensile test was obtained. Similar to Reference Example 1, data of the tensile strength, yield strength, Young's modulus, and the breaking elongation of each post-forming test piece were obtained. These data were compared with the data of the reference T8 material.

Similar to Reference Example 1, the tensile strength was chosen as representative data, and a relationship between the tensile strength and the strain amount was plotted on a graph. Results of the plotting are indicated by white outlined diamond-shaped symbols in Fig. 3. Further, similar to Reference Example 1, the dislocation density of each post-forming test piece was measured, and the T1 phase deposited thereon was evaluated.

### (Comparison of Reference Examples 1 and 2)

It is clear from the graph of Fig. 3 that the post-forming test pieces of Reference Example 1 and the post-forming test pieces of Reference Example 2 exhibit similar tensile strengths to each other. A dotted line in the graph of Fig. 3 represents the tensile strength of the reference T8 material. Substantially the same tensile strength as that of the reference T8 material was obtained by imparting a strain of about 2 % whether the imparted strain was a compressive strain (i.e., Reference Example 1) or a tensile strain (i.e., Reference Example 2).

Also regarding the yield strength, Young's modulus, and breaking elongation, both the post-forming test pieces of Reference Example 1 and the post-forming test pieces of Reference Example 2 exhibited substantially the same or better results compared to the reference T8 material although specific data are not given herein. Further, it was found that substantially the same degree of dislocation was introduced into each of the post-forming test pieces of Reference Example 1 and the post-forming test pieces of Reference Example 2. Thus, it is understood that, by imparting the strain under cold working conditions, whether the imparted strain is a compressive strain or a tensile strain, substantially the same strength can be obtained, and in addition, the T8 state can be realized.

### (Working Example 1)

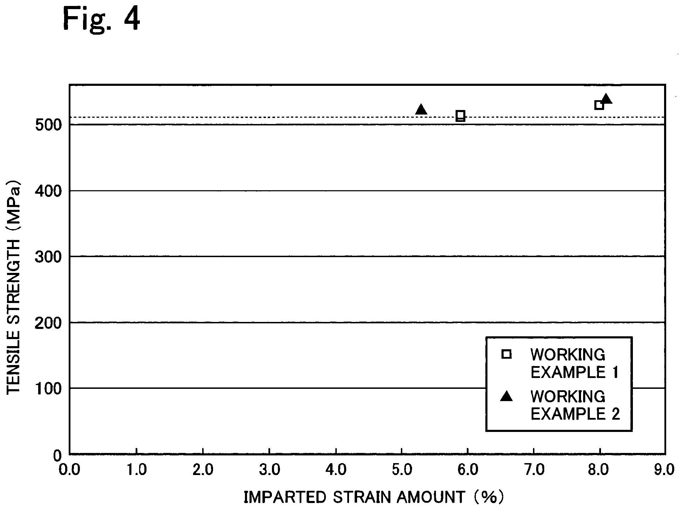

An aluminum-lithium alloy 2198 available from Constellium was used to obtain a pre-forming test piece whose temper was adjusted to W by thermal refining. Other than this point, in the same manner as in Reference Example 1, a strain-imparted test piece imparted with a compressive strain and a post-forming test piece resulting from subjecting the strain-imparted test piece to artificial age-hardening treatment were obtained. From such post-forming test pieces, test pieces for use in a tensile test were obtained. The tensile test was performed in the same manner as in Reference Example 1, and thereby data of the tensile strength, yield strength, and breaking elongation of each post-forming test piece were obtained. These data were compared with the data of the reference T8 material. Also, similar to Reference Example 1, the tensile strength was chosen as representative data, and a relationship between the tensile strength and the strain amount was plotted on a graph. Results of the plotting are indicated by white outlined square symbols in Fig. 4.

### (Working Example 2)

A pre-forming test piece with a temper W was obtained in the same manner as in Working Example 1. Other than this point, in the same manner as in Reference Example 2, a strain-imparted test piece imparted with a tensile strain and a post-forming test piece resulting from subjecting the strain-imparted test piece to artificial age-hardening treatment were obtained. However, in Working Example 2, three target amounts of tensile strains of 2%, 5%, and 8% were imparted.

From such post-forming test pieces, in the same manner as in Reference Example 1 (Reference Example 2 or Working Example 1), data of the tensile strength, yield strength, and breaking elongation were obtained. These data were compared with the data of the reference T8 material. Also, similar to Working Example 1, the tensile strength was chosen as representative data, and a relationship between the tensile strength and the strain amount was plotted on a graph. Results of the plotting are indicated by black up-pointing triangular symbols in Fig. 4.

### (Comparison of Working Examples 1 and 2)

It is clear from the graph of Fig. 4 that the post-forming test pieces of Working Example 1 and the post-forming test pieces of Working Example 2 exhibit similar tensile strengths to each other. A dotted line in the graph of Fig. 4 represents the tensile strength of the reference T8 material. Substantially the same or better tensile strength compared to the reference T8 material was obtained by imparting a strain of about 5 % or more whether the imparted strain was a compressive strain (i.e., Working Example 1) or a tensile strain (i.e., Working Example 2). Also regarding the yield strength and breaking elongation, both the post-forming test pieces of Working Example 1 and the post-forming test pieces of Working Example 2 exhibited substantially the same or better results compared to the reference T8 material although specific data are not given herein.

From the comparison of the results in Working Examples 1 and 2 with the results in Reference Examples 1 and 2, it is understood that, in both Working Examples and Reference Examples, substantially the same or better results were obtained compared to the reference T8 material. Thus, it is understood that, by forming the sheet material whose temper has been adjusted to W (or to substantially T3) by thermal refining through solution heat treatment into a predetermined shape under cold working conditions while imparting a strain to the sheet material, and then subjecting the sheet material to the artificial age-hardening treatment, the T8 state can be realized. It is also understood that, by imparting the strain under cold working conditions, whether the imparted strain is a compressive strain or a tensile strain, substantially the same strength can be obtained, and in addition, the T8 state can be realized.

### Industrial Applicability

The present invention is widely and suitably applicable in the field of manufacturing a frame that is a formed component for aircraft use made of an aluminum alloy.

## Claims

1. A method of manufacturing a frame that is a formed component for aircraft use made of an aluminum alloy, the method comprising:
subjecting a material made of an aluminum-lithium alloy containing lithium to solution heat treatment (S01); then
performing a cold working process (S02), in which a multi-stage roll forming apparatus including section rolls and curving rolls is used to form the material into a predetermined shape under cold working conditions; and thereafter
subjecting the material to artificial age-hardening treatment (S04), wherein
when forming the material into the predetermined shape in the cold working process, a compressive strain is imparted to the material, and
in the cold working process:
the entire material is rolled, with a clearance of first-stage rolls of the multi-stage roll forming apparatus being adjusted to be less than an original thickness of the material (S21), such that the compressive strain of not less than 2 %, the compressive strain being equivalent to a dislocation density necessary for realizing a temper T8 state, is imparted to the material; and thereafter
the material is formed by the section rolls at a second or subsequent stage of the multi-stage roll forming apparatus to have a predetermined cross-sectional shape (S22), and then the material is formed by the curving rolls of the multi-stage roll forming apparatus to have a predetermined contour, such that the material is formed into a frame (S23).

## Patentansprüche

1. Verfahren zur Herstellung eines Rahmens, bei dem es sich um ein aus einer Aluminiumlegierung geformtes Bauteil zur Verwendung in Flugzeugen handelt, wobei das Verfahren Folgendes umfasst:
Durchführen einer Lösungswärmebehandlung (S01) an einem Material aus einer lithiumhaltigen Aluminium-Lithium-Legierung; dann
Durchführen eines Kaltverarbeitungsprozesses (S02), bei dem eine mehrstufige Vorrichtung zum Walzprofilieren, die Profilwalzen und Biegewalzen enthält, verwendet wird, um das Material unter Kaltverarbeitungsbedingungen in eine vorbestimmte Form zu formen; und danach
Durchführen einer künstlichen Aushärtungsbehandlung (S04) an dem Material, wobei
beim Formen des Materials in die vorbestimmte Form im Kaltverarbeitungsprozess eine Druckspannung auf das Material ausgeübt wird, und
bei dem Kaltverarbeitungsprozess:
das gesamte Material gewalzt wird, wobei ein Abstand der Walzen der ersten Stufe der mehrstufigen Vorrichtung zum Walzprofilieren so eingestellt wird, dass er geringer ist als eine ursprüngliche Dicke des Materials (S21), so dass die Druckspannung von nicht weniger als 2 % auf das Material übertragen wird, wobei die Druckspannung einer Versetzungsdichte entspricht, die zum Erreichen eines T8-Zustands erforderlich ist; und danach
das Material durch die Profilwalzen in einer zweiten oder nachfolgenden Stufe der mehrstufigen Vorrichtung zum Walzprofilieren so geformt wird, dass es eine vorbestimmte Querschnittsform aufweist (S22), und dann das Material durch die Biegewalzen der mehrstufigen Vorrichtung zum Walzprofilieren so geformt wird, dass es eine vorbestimmte Kontur aufweist, so dass das Material zu einem Rahmen geformt wird (S23).

## Revendications

1. Procédé de fabrication d'un cadre consistant en un composant façonné destiné à une utilisation aéronautique et composé d'un alliage d'aluminium, le procédé comprenant les étapes consistant à :
soumettre un matériau composé d'un alliage aluminium-lithium contenant du lithium à un traitement thermique de mise en solution (S01) ; puis
effectuer un processus d'écrouissage (S02) dans le cadre duquel un appareil de profilage à plusieurs étages comprenant des cylindres de section et des cylindres de cintrage est utilisé pour façonner le matériau selon une forme prédéterminée dans des conditions d'écrouissage ; et ensuite
soumettre le matériau à un traitement de durcissement par vieillissement artificiel (S04) ; sachant que
lors du façonnage du matériau selon la forme prédéterminée lors du processus d'écrouissage, une déformation de compression est conférée au matériau, et
lors du processus d'écrouissage :
le matériau entier est laminé, le jeu entre les cylindres du premier étage de l'appareil de profilage à plusieurs étages étant ajusté pour être inférieur à l'épaisseur d'origine du matériau (S21), de telle façon qu'une déformation de compression non inférieure à 2 %, la déformation de compression étant équivalente à la densité de dislocation nécessaire pour réaliser un état de revenu T8, est conférée au matériau ; après quoi
le matériau est façonné par les cylindres de section au niveau d'un deuxième étage ou étage ultérieur de l'appareil de profilage à plusieurs étages pour obtenir une forme de section transversale prédéterminée (S22), puis le matériau est façonné par les cylindres de cintrage de l'appareil de profilage à plusieurs étages pour obtenir un contour prédéterminé, si bien que le matériau façonné prend la forme d'un cadre (S23).
